# NEW EUROPEAN PATENT SPECIFICATION

(11) **EP 0 423 215 B2**
(45) Date of publication and mention of the opposition decision: **09.07.1997**
(45) Mention of the grant of the patent: 03.03.1993
(21) Application number: 89908394.3
(22) Date of filing: 06.07.1989
(51) Int. Cl.: B23K 26/08

(54) **A METHOD OF PROCESSING AN ARTICLE BY MEANS OF A LASER BEAM**
VERFAHREN ZUR BEHANDLUNG EINES ERZEUGNISSES MITTELS EINES LASERSTRAHLS
PROCEDE DE TRAITEMENT D'UN ARTICLE AU MOYEN D'UN FAISCEAU LASER

(30) Priority: 07.07.1988 DK 3785/88
(43) Date of publication of application: 24.04.1991
(73) Proprietor: GRUNDFOS INTERNATIONAL A/S, DK-8850 Bjerringbro (DK)
(72) Inventor: OLSEN, Flemming, Ove, DK-4295 Stenlille (DK)
(74) Representative: Siiger, Joergen
(86) International application number: DK8900169
(87) International publication number: WO9000459

(56) References cited:
- EP-A- 48 487
- EP-B- 0 339 888

## Description

The invention relates to a method of processing one or more articles by means of a pulsed laser beam, whereby the processing is performed in several steps.

### Background Art

Laser processing by means of continuous or pulsed lasers is known. Furthermore it is common knowledge to drill holes by means of laser, where either one pulse or a number of pulses are used per hole, said holes being completed one by one, cf. German Offenlegungsschrift no. 2,719,275. The latter process is used for engraving pressure cylinders, whereby a hole or a recess is completed before the laser beam is directed towards another area so as to produce the next hole.

The closest prior art EP-B1-0 339 888 according to Article 54(3) EPC discloses a method or processing one or more articles by means of a pulsed laser beam, whereby the processing is performed in several steps, wherein after each processing step the laser beam is displaced relative to the article so as to allow the performance of the following processing step in a successive processing area, the processing sequence being recommenced and repeated until the desired processing in each processing area has been completed, the pulse emission of the laser beam being synshconized with a relative movement of the article in such a manner that during each of the following pulse sequences the laser beam hits the same row of spots on the article, the laser emitting pulses at a pulse interval between successive pulses at the same spot which is extremely long compared to the pulse width.

### Disclosure of the Invention

The object of the present invention is to show how the quality of the processing can be improved without involving a substantially prolonged processing period.

According to the invention a pulse interval is selected for each processing which is extremely long compared to the pulse width. Typical pulse intervals are 1,000 times longer than the pulse width, and simultaneously the pulses are selected in a suitable pulse width interval, typically 0.02-0.1 ms, which is unusually short as far as CO₂ drilling lasers and other conventional drilling lasers are concerned. As a result it is possible to achieve an otherwise unachievable hole quality. The latter is due to the fact that the removal of material during each pulse is insignificant, and the amount of plasma above or in the hole is reduced which in turn substantially reduces the undesired formation of fuse in and around the hole. At the same time the plasma and the metal vapours disappear from the hole and the area between the laser beam and the hole before the successive pulse hits the article. In this manner holes are achieved which compared to previously are more cylindrical and contain less resolidified fuse on the walls of the hole. As a result it is possible to produce holes typically of a diameter and depth of
metal: diameter 0.08-0.15 mm; depth: 1.0 mm
polycarbonate: diameter: 0.2 mm; depth 3.00 mm.

When several holes are drilled simultaneously during a continuous movement of the surface of the article relative to the laser beam, it is possible to achieve a productivity far higher than usual, said surface following a path in such a manner that the area(s) on the article to be processed several times, typically 10-20 times, pass below the laser beam and is(are) thereby repeatedly hit by a short laser pulse at a low efficient frequency. The productivity achieved is even far higher than the productivity achieved by a single pulse drilling in the same material, the latter single pulse drilling resulting in a substantially poorer hole quality, resolidified fuse on the walls of the hole, and often a rather significantly varying hole size, as well as in larger hole diameters.

During the production of a circle of holes on tubes or surfaces, where the article is rotating and the holes are produced by means of a number of pulses in each hole, i.e. one pulse per rotation, the following conditions determine the productivity:

### - The diameter of the bore, the diameter of the focusing laser beam and the pulse width.

It is possible to determine a maximally allowable relative peripheral speed in response to the diameter of the holes and the width of each laser pulse. When holes with an inlet diameter of 0.2 mm are to be drilled in steel by means of a laser beam of a focusing diameter of 0.1 mm, and when each laser pulse is of a duration of about 0.05 ms, the maximally allowable peripheral speed is about 1 m/s.

### - The pulse frequency of the laser

The maximum pulse frequency of the laser determines the shortest interval between two pulses. CO₂ lasers can be pulsed at a maximum frequency of up to 200-5000 Hz. When the distance between the holes is short, the maximum frequency of the laser sets a limit to the peripheral speed of the article.

### - The maximum drilling frequency of a hole

As previously mentioned one of the recognitions behind the invention is that it is possible to drill holes of high quality by combining short pulses and low repetition frequencies, which leads to the conclusion that a maximum frequency applies, typically 10-20 Hz, at which a hole can be drilled. The latter sets a limit to the number of revolutions possible for the drilling.

When holes are to be drilled in a tube of stainless steel of

| | |
|---|---|
| - a wall thickness of | 1 mm |
| - a diameter of | 30 mm |
| - a hole diameter of | 0.2 mm |
| - a distance between the holes of | 0.5 mm |

by means of a laser emitting

| | |
|---|---|
| - a pulse width of | 50 µs |
| - at a maximum frequency of | 2500 Hz |
| - a beam of a diameter of | 0.1 mm |

and when the following data are to be used per hole

| | |
|---|---|
| - number of pulses | 10 |
| - a maximally efficient frequency of | 20 Hz |

the following limits are set to:

| | |
|---|---|
| - peripheral speed | 1 m/s |
| involving a maximum speed of rotation of | 10 r.p.s. |
| - maximum laser frequencies of | 2500 Hz |
| as well as holes per rotation | approx. 200 |
| involving a maximum speed of rotation of | 12 r.p.s. |
| - maximally efficient frequency | 20 Hz |
| involving a maximum speed of rotation of | 20 r.p.s. |

Thus the peripheral speed of the above example sets a limit to the number of revolutions to 10 r.p.s. As each hole requires 10 pulses, the 200 holes are completed in about 1 s.

No other drilling technique exists, not even a technique based on laser, which can produce the above number of holes of such a quality in 1 s. A solid state laser drills approximately 10 holes per s in the same material/thickness but resulting in a larger diameter of the holes.

Both a solid state laser and a CO₂ laser can drill the same hole quality at a conventional laser drilling technique at a speed of 0.5-2 holes per s.

### Brief Description of the Drawing

The invention is described in greater details below by means of examples of embodiments and with reference to the accompanying drawings, in which
Fig. 1 is a sectional view through an article with a laser drilled row of holes, the centre lines of said holes being radially situated in the article,
Fig. 2 illustrates a pulsed fine cutting or welding, where a number of articles are to be cut or welded at a low pulse frequency, said articles being shown from the top,
Fig. 3 illustrates a device synchronizing the movement of the laser and the article during laser drilling,
Fig. 4 illustrates a system reducing or eliminating the relative movement during the emission of a laser pulse,
Fig. 5 illustrates an equipment unit for laser drilling tubes,
Fig. 6 illustrates an equipment unit for laser drilling holes in a metal disk,
Fig. 7 illustrates a trepanation method,
Fig. 8 illustrates a system for producing spinner wheels,
Fig. 9 illustrates an equipment unit for laser engraving pressure rollers, and
Fig. 10 some trigger signals.

### Best Mode for Carrying Out the Invention

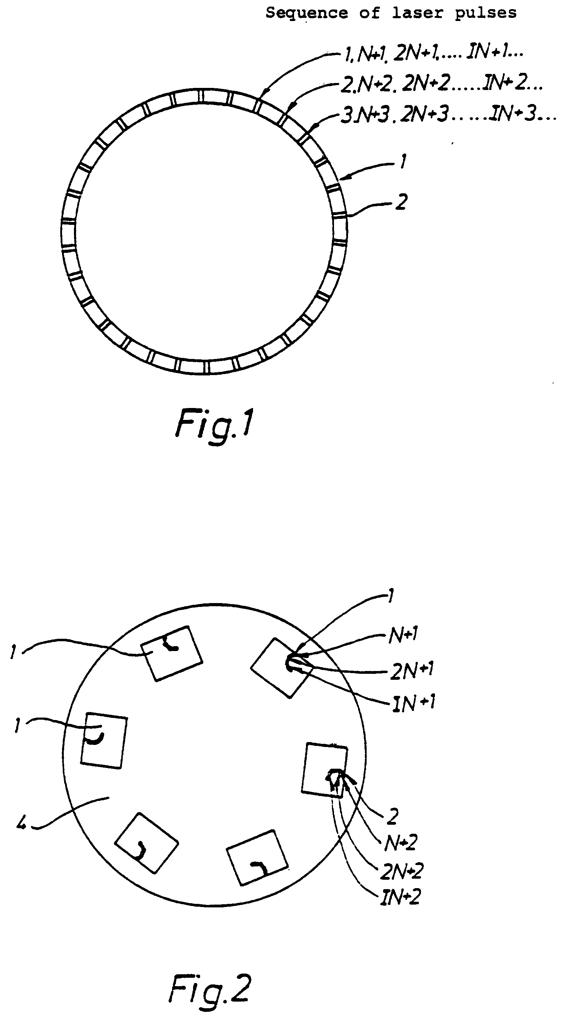

During a laser processing, such as cutting, drilling or welding, by means of a pulsed laser, a combination of laser pulse and pulse intervals is used during each processing step, whereby the pulse width must be substantially shorter than the pulse interval for the sake of the quality of the processing. In order to increase the productivity without affecting the quality, a simultaneous processing of several articles or article areas is performed, cf. Fig. 1 outlining a drilling of N holes in a row on a cylindrical article 1.

Fig. 1 is a cross-sectional view of an article with a laser drilled row of holes, the centre lines of said holes extending radially in the article 1. Each hole 2 must be processed by a pulse with a large pulse interval simultaneous with the article 1 being continuously turned. A suitable synchronizing device causes the laser to emit a short pulse each time the position of a hole 2 is passed.

The principle of a pulsed fine cutting and welding is exemplified in Fig. 2, where a number of articles 1 are to be welded at a low pulse frequency. The articles 1 are mounted on a rotating device 4, and the welding is performed in the outlined sequence while the device 4 rotates continuously and relatively quickly and simultaneous with the beam being moved rather slowly in the desired pattern.

Fig. 2 is a top view of the articles 1, i.e. from the side where the laser beam is emitted.

While the relative movement is established, the article 1 and/or the focal point of the laser beam can be moved. Thus the relative movement generating each welding geometry of Fig. 2 can be established both by translating the centre line of the rotating device 4 and by displacing the focal point of the laser beam, e.g. by means of movable optical means.

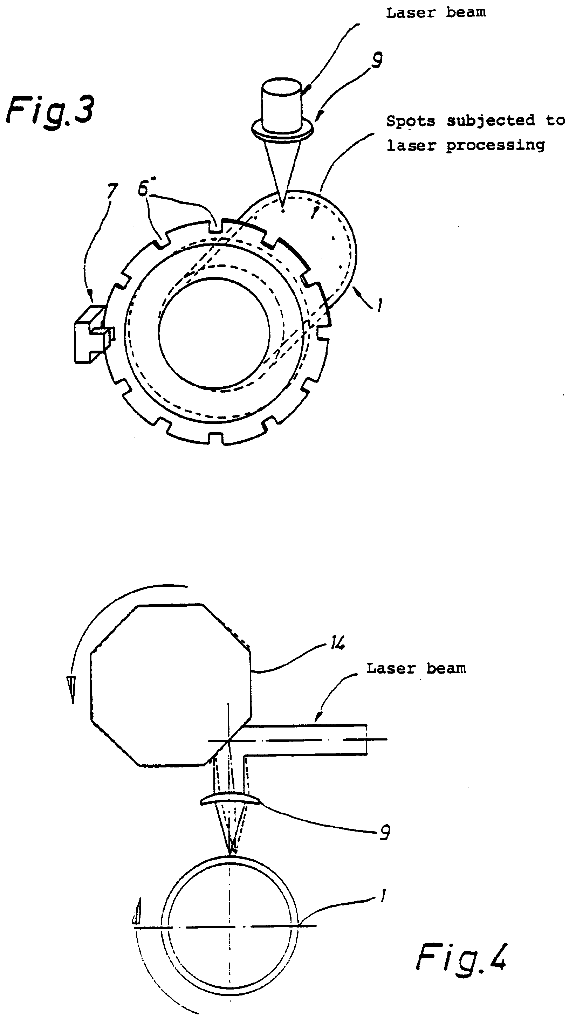

Some laser processings require an amendment of the parameters during each processing cycle. Such an amendment is advantageously performed in the processing sequence described in connection with Fig. 3. An example thereof is the drilling of a large number of uniform holes in a metal wheel, whereby each cycle comprises the steps of first drilling a through hole followed by a cutting of the final geometry of the hole by cutting from the first hole. The drilling of the hole and the following cutting are performed by two different sets of processing parameters, i.e. different pulse energies and different gas pressures inside the cutting nozzle. The technique described renders it possible to complete simultaneously a large number of starting holes, whereafter the parameters are changed before the cutting is performed. In this connection it is possible to perform more complicated parameter amendments.

During the processing sequence outlined in Fig. 1, the movement of the article is synchronized with the triggering of the laser by means of a continuously rotating article holder 6. The article holder comprises a detecting device 7, whereby the laser pulse is triggered as outlined in Fig. 3, wherein an optocoupler 7 registers each time a notch 6" or a hole in a perforated disk passes the holder 6, said disk being mounted on the rotating article holder. The optocoupler 7 transmits a signal triggering the laser through suitable electronics. The trigger signal can be interrupted and transmitted to the laser by means of a manual or automatic system, such as a servomechanism. As a result, a precisely defined number of rotations are performed with the laser coupled to the system (N in Figs. 1 and 2). In addition, the starting up/slowing down of the article holder 6 or the insertion/removal of the article in and from the continuously rotating article holder are performed without causing the laser to emit a pulse.

The above trigger system can, of course, also be mounted on the shaft of the motor driving the article holder or in a transmission system between the driving motor and the article holder.

The synchronizing can furthermore be provided by a control system transmitting signals both to the article-rotating system and to the laser. The latter is for instance rendered possible by an electronic device or a computer generating pulses in such a manner that said pulses control a step motor. In turn the step motor controls the movement of the article simultaneous with triggering the laser. The control system may in the latter case be such that the step motor can receive a predetermined number of pulses each time the laser is to be triggered one time.

Fig. 4 illustrates a moving pattern, according to which the article passes the optical instruments of the laser in a uniform movement while the optical instruments simultaneously perform a uniform movement so as in each pulse moment to reduce or eliminate the relative movement between the article and the laser beam. Fig. 4 shows a system where the centre line of the laser beam is caused to sweep by a rotating polygonal deflecting mirror 14 while the article 1 rotates, said deflecting mirror 14 being situated in front of a convex lens 9 in the present embodiment. By synchronizing the rotation of the article with the rotation of the mirror 14 and the emission of laser pulses, it is possible to prevent the focal point of the laser beam from moving relative to the article while each laser pulse is emitted.

The invention is illustrated in greater details below by means of the examples.

### Laser drilling of polycarbonate articles for heart/lung machines.

The article is shaped as a substantially cylindrical component, where a number of holes are to be used for oxidizing blood. The surface, in which the holes are to be produced, is tubular and of a diameter of about 60 mm. The wall thickness is about 3 mm. 120 holes of a diameter of about 0.22 mm are situated in a plane perpendicular to the axis of the tube. The processing parameters are:

| | |
|---|---|
| - pulse width: | about 50 µs |
| - number of pulses: | about 20 per hole |
| - number of revolutions: | about 5 r.p.s. |
| - processing period for 120 holes: | 4 s. |

The article is shown in Figs. 1 and 3.

### Laser drilling of tubes.

Reference is made to figure 4, where rings of holes of about 0.2 mm are to be drilled in tubes of a wall thickness of 1 mm and with about 200 holes per ring and one ring per s.

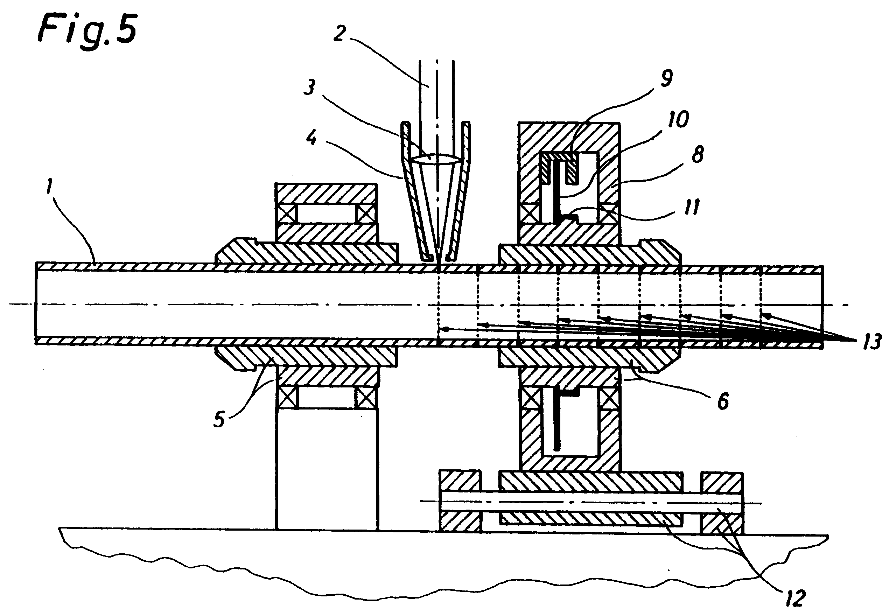

The article and the equipment unit for the production thereof are shown in Fig. 5.

A tube 1 is provided with rows 13 of holes, only one row of holes being produced at a time by the described technique. The pulsed laser beam 2 is focused in a spot on the surface of the article by means of a lens 3. A gas beam is transmitted coaxially to the surface of the article by means of a nozzle 4 in order to remove vapours above the article. The article is rotated by two rotating clamping devices 5 and 6 centering and retaining the tube. A driving means, such as a tandem gear or a tandem wheel 11, rotates the tube and holding devices. A perforated disk 10 is situated on one rotating device, said disk passing through an optocoupler 9. The optocoupler 9 emits a voltage varying in response to whether light can be transmitted from one side to the other (hole in the perforated disk) or the light from one side of the optocoupler cannot pass to the other side (the perforated disk is shielding). The optocoupler is used for triggering a laser pulse passing through a hole in the perforated disk. When a suitable number of revolutions and the processing of a row of holes have been completed, the laser is interrupted and the tube is axially displaced by the clamping device 5 being opened. Subsequently, the tube is displaced by means of a displacing means 12 optionally driven by a motor. Now the clamping device 5 clamps about the tube and the clamping device 6 is opened, whereafter the displacing means 12 returns to its starting position and the clamping device 6 again clamps about the tube. The tube has now been displaced a short distance and is again rotating whereafter the next row of holes can be drilled. The above cycle continues until the processing,has been completed.

### Laser drilling of holes in a metal disk

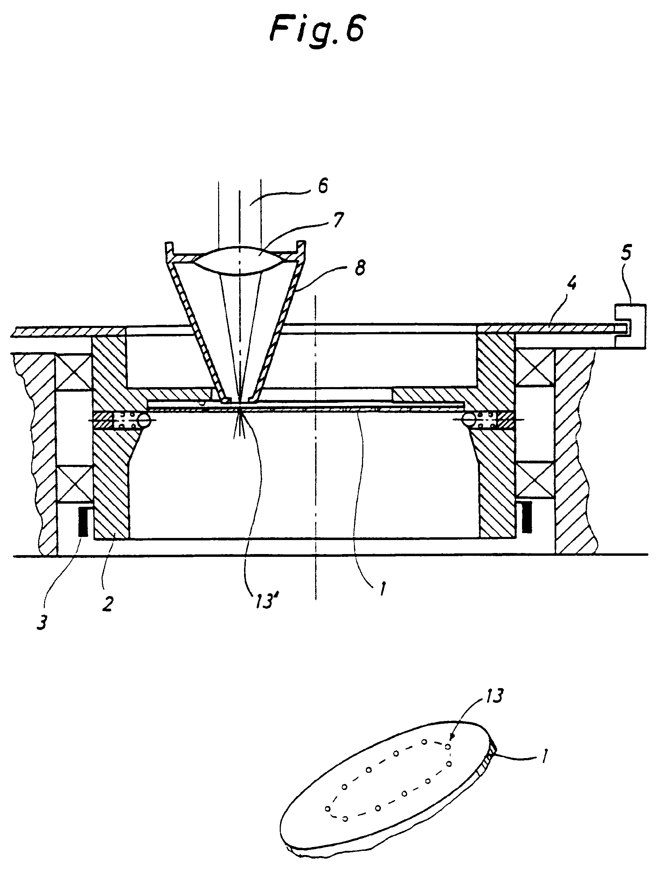

Instead the holes 13 can be drilled in a circular track in a disk. When the track is of a diameter of 40 mm, all the holes in the track are drilled in about 1.5 s, provided there are less than 375 holes in the track. The article and the equipment unit for the production are shown in Fig. 6.

In this example, a circular disk 1 has been inserted from the bottom and upwards into a rotating article holder 2 optionally driven by a driving belt 3. The article holder 2 is provided with a perforated disk 4 activating an optocoupler 5 for the synchronizing of the laser pulses with the number of revolutions. The laser beam 6 is focused by means of a lens 7, and a gas nozzle 8 is situated between the lens 7 and the processing spot, said gas nozzle discharging a gas beam so as to remove material vapours etc.

### Cutting holes in for instance spinner wheels for the production of glass wool.

Large spinner wheels are used for the production of glass wool. The melted glass is poured into a quickly rotating bowl rotating about a vertical axis. Subsequently, the centrifugal force presses the glass out through a number of holes in the vertical cylindrical sides of the bowl.

A spinner wheel comprises about 17,000 holes of a diameter of about 1 mm. The holes are situated at regular intervals of about 2 mm on the cylindrical surface and are arranged in about 30 circular tracks, each track including about 600 holes. The spinner is made of high-strength steel and in the hole section the spinner is of a wall thickness of about 4 mm.

These holes are now drilled either by means of an electron beam, ECM, or by means of a laser.

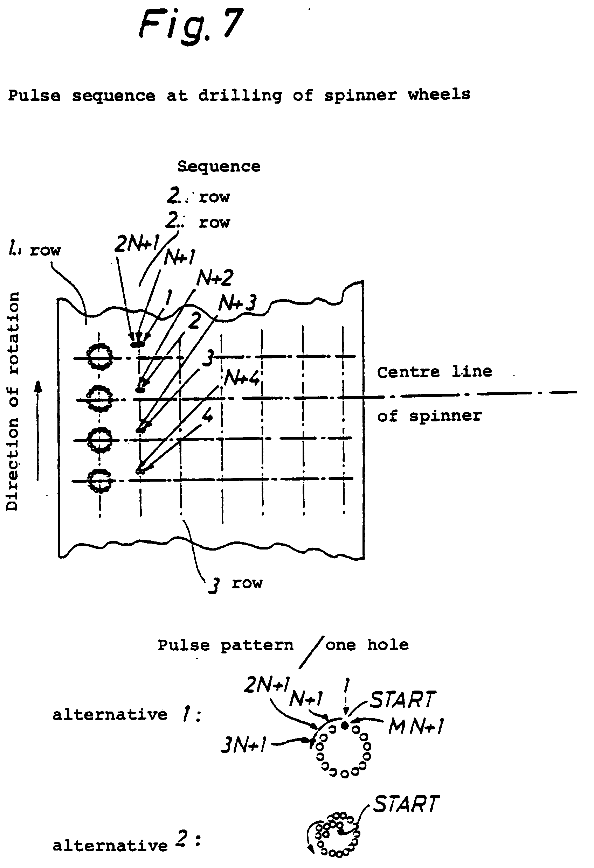

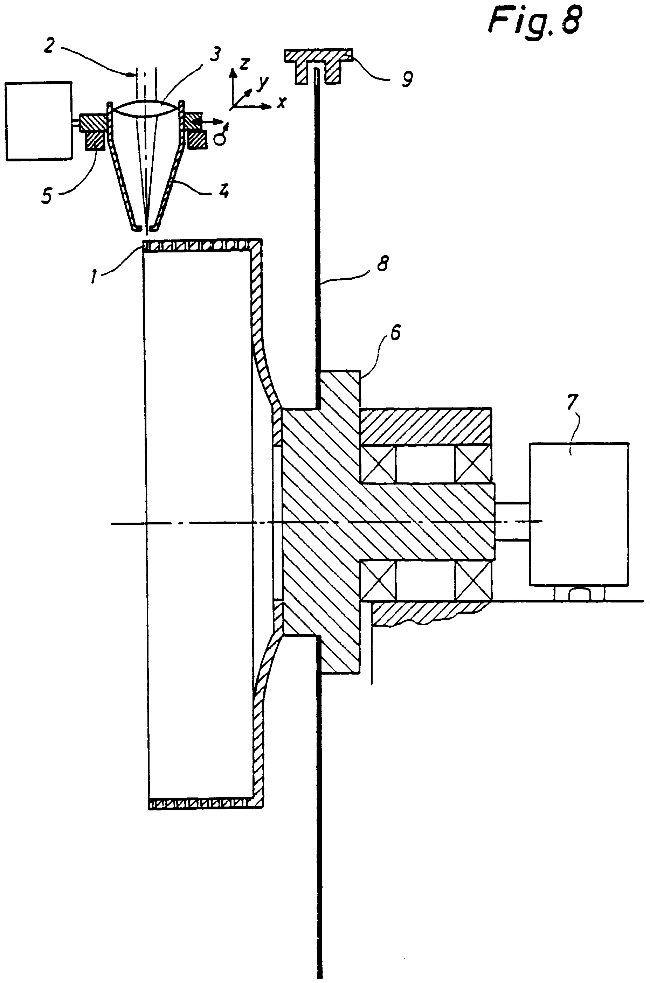

By the new technique according to the invention the trepanation is to be performed as outlined in Fig. 7. In this embodiment, holes arranged in a circular ring are simultaneously produced during the rotation of the article in such a manner that initially only one beam is transmitted into each hole followed by a second beam into each hole etc. The beam path and the article are displaced relative to one another after each rotation resulting in a cutting of each hole. Fig. 8 illustrates an equipment unit for producing spinner wheels.

The article 1 to be drilled is rotated by an article holder 6 driven by a motor 7. A perforated disk 8 is mounted on the article holder, and as previously described said disk triggers an optocoupler 9 so as to trigger the laser. The processing is also performed by means of a lens/nozzle system 3, 4 concentrating the laser beam and transmitting a gas beam towards the article. Fig. 8 shows in fact a laser cutting, where the gas beam is of major importance because said beam removes fuse from the cutting groove and co-operates in exothermal reactions with the melted/evaporated material deriving from the laser cutting. The relative cutting movement between the article and the laser beam can be provided by means of an x-y-moving system 5, which may be numerically controlled.

A pulse width of 0.1 ms involves a peripheral speed of about 0.5 m/s, which corresponds to a pulse frequency of 250 Hz. When 80 pulses are used for cutting each hole, the drilling per hole is of a duration of about 0.33 s, which means a total processing period of about 2 h.

### Laser engraving pressure rollers

In connection with the production of pressure rollers, cf. for instance the previously mentioned German Offenlegungsschrift, it is possible to improve the quality of the holes by producing each hole by means of several pulses at a low frequency. Compared to the previous examples, such an engraving technique requires shorter laser pulses, such as CO₂ lasers operating with pulse widths in the range of 0.1-10 µ. The depth per pulse in a hole is more or less proportional to the pulse width, and the short-pulsed lasers provide the best results. Several pulses are, however, required per hole which means more revolutions for the production of a ring of holes.

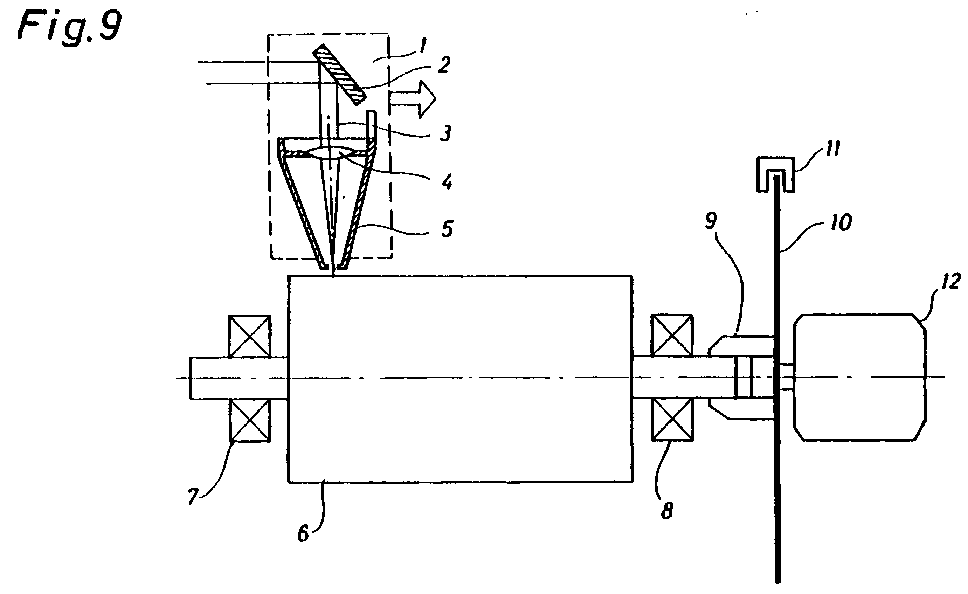

The basic structure of the article and the equipment for the production thereof are shown in Fig. 9.

A pressure roller 6 is situated on two beatings 7, 8 driven by a motor 12 through a holding device (claw/centering cartridge) 9. In this case too a perforated disk 10 and an optocoupler 11 are involved. An optical slide 1 can be displaced along the axis of the pressure roller 6. The optical slide comprises a deflection mirror 2 deflecting the laser beam 3 through the lens 4 and the nozzle 5 in such a manner that the laser beam 3 is focused on the surface of the article. One track at a time is completed on the pressure roller 6, whereafter the slide 1 is displaced and an additional track is produced. The holes in the pressure roller are typically 10-100 µm deep, and the number of holes per cm in the axial and tangential direction is typically between 50 and 300.

### General remarks concerning triggering

Triggering can also be performed by means of other devices beyond perforated disks/optocouplers, such as for instance by means of a surge generator controlling both a step motor and the laser.

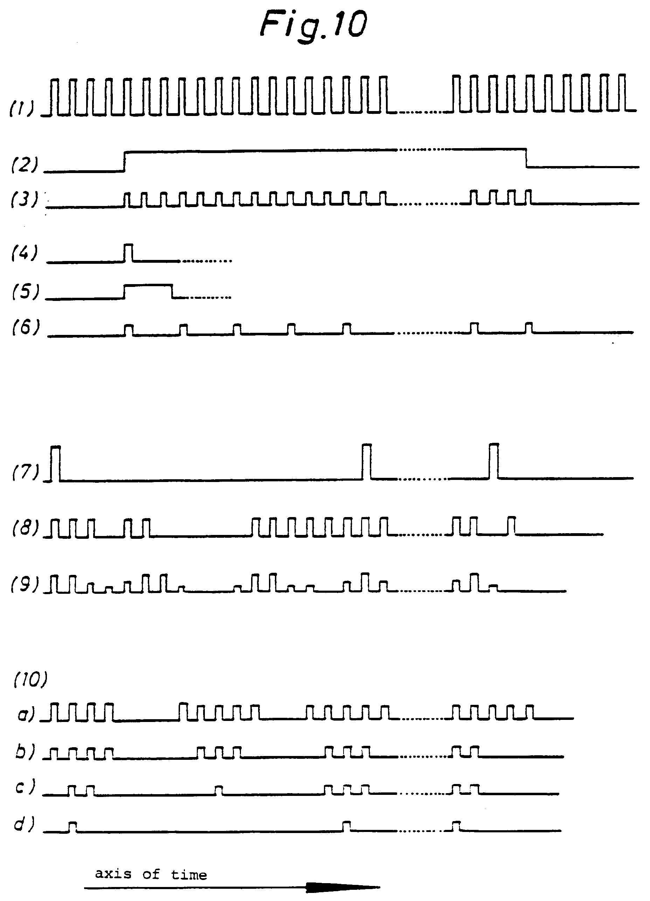

The trigger Signals of Fig. 10 can be used regardless of the triggering method.

A continuously rotating perforated disk triggers an optocoupler so as to transmit a signal 1. The system controlling the processing can then transmit a primary gating signal 2 for a suitable period, such as a predetermined number of revolutions. Subsequently, when permitted by the primary gate 2, the laser emits pulses 3 synchronously with 1.

The width of the laser pulse may be as 4. A local gating 5 can, however, set a minimum period before the next pulse can be emitted, which results in laser pulses with a longer interval 6. The latter procedure is rendered possible by electronically selecting different number of holes.

In certain situations, such as when engraving pressure rollers, it is preferred to include an additional triggering 7, for instance for each rotation, so as to ensure a varying pattern described below. Instead of a gating over several rotations, a control system, such as a computer, can generate information on a combined gating when some patterns are desired to be generated in form of on/off for a pulse 8, or in form of varying pulse sizes per triggering 9.

It is also possible to perform several rotations, where the number of spots to be struck varies so as for instance to generate varying hole depths cf. 10a-d.

## Claims

1. A method of processing one or more articles by means of a pulsed laser beam, whereby the processing is performed in several steps, wherein after each processing step the laser beam is displaced relative to the article so as to allow the performance of the following processing step in a successive processing area, the processing sequence being recommenced and repeated until the desired processing in each processing area has been completed, the pulse emission of the laser beam being synchronized with a relative movement of the article in such a manner that during each of the following pulse sequences the laser beam hits the same row of spots on the article, the laser being a CO₂ laser emitting pulses at a pulse interval between successive pulses at the same spot which is extremely long compared to the pulse width.

2. A method according to claim 1, wherein the pulse interval is 1000 times longer than the pulse width interval, and simultaneously the pulses are selected in a pulse width interval of 0.02 - 0.1 ms.

3. A method as claimed in claim 1 or 2, wherein there is a relative movement between the article and the laser beam during the pulsing and the pulse interval.

4. A method as claimed in claim 1 or 2, wherein during each laser pulse the laser beam follows the surface of the article by a simultaneous movement of the laser beam and the article.

5. A method as claimed in one or more of the preceding claims, wherein the article rotates at a uniform speed during the processing.

6. A method as claimed in one or more of the preceding claims for cutting, engraving or welding, wherein the pulse emission of the laser beam is synchronized with the relative movement of the article in such a manner that during each of the following pulse sequences the laser beam hits rows of spots which are successively displaced relative to the proceeding rows of spots.

7. A method as claimed in claim 6, wherein the synchronizing device comprises an optocoupler (7).

## Patentansprüche

1. Verfahren zur Behandlung eines oder mehrerer Erzeugnisse mittels eines gepulsten Laserstrahls, wobei die Behandlung in mehreren Schritten erfolgt, dadurch gekennzeichnet, daß der Laserstrahl nach jedem Behandlungsschritt gegenüber dem Erzeugnis so verfahren wird, daß der folgende Behandlungsschritt in einem nachfolgenden Behandlungsbereich ausgeführt werden kann, wobei der Behandlungsablauf wieder begonnen und wiederholt wird, bis die gewünschte Behandlung in jedem Behandlungsbereich abgeschlossen ist, daß die Impulsemission des Laserstrahls mit einer Relativbewegung des Erzeugnisses in einer solchen Weise synchronisiert wird, daß der Laserstrahl während jeder der folgenden Impulsfolgen auf dieselbe Punktreihe auf dem Erzeugnis trifft, und daß der Laser ein CO₂-Laser ist, der Impulse mit einem Impulsintervall zwischen aufeinanderfolgenden Impulsen an demselben Punkt emittiert, das im Vergleich zur Impulsbreite extrem lang ist.

2. Verfahren nach Anspruch 1, dadurch gekennzeichnet, daß das Impulsintervall 1000-fach länger ist als das Impulsbreitenintervall und daß die Impulse gleichzeitig in einem Impulsbreitenintervall von 0,02 bis 0,1 ms ausgewählt werden.

3. Verfahren nach Anspruch 1 oder 2, gekennzeichnet durch eine relative Bewegung zwischen dem Erzeugnis und dem Laserstrahl während der Impulsgabe und des Impulsintervalls.

4. Verfahren nach Anspruch 1 oder 2, dadurch gekennzeichnet, daß der Laserstrahl während jedes Laserimpulses der Oberfläche des Erzeugnisses bei gleichzeitiger Bewegung des Laserstrahls und des Erzeugnisses folgt.

5. Verfahren nach einem oder mehreren der vorangehenden Ansprüche, dadurch gekennzeichnet, daß sich das Erzeugnis mit gleichbleibender Geschwindigkeit während der Behandlung dreht.

6. Verfahren nach einem oder mehreren der vorangehenden Ansprüche zum Schneiden, Gravieren oder Schweißen, dadurch gekennzeichnet, daß die Impulsabgabe des Laserstrahls synchron mit der Relativbewegung des Erzeugnisses so abläuft, daß der Laserstrahl während jeder der folgenden Impulsfolgen auf Punktreihen trifft, die gegenüber der vorangehenden Punktreihe aufeinanderfolgend versetzt sind.

7. Verfahren nach Anspruch 6, dadurch gekennzeichnet, daß die Synchronisiereinrichtung einen Optokoppler (7) umfaßt.

## Revendications

1. Procédé pour traiter un ou plusieurs articles au moyen d'un rayon laser pulsé, le procédé étant réalisé en plusieurs étapes, procédé dans lequel après chaque étape de traitement le rayon laser est déplacé par rapport à l'article de façon à permettre la réalisation de l'étape suivante dans une zone de traitement suivante, la séquence de traitement étant recommencée et répétée jusqu'à ce que le traitement désiré dans chaque zone de traitement ait été achevé, l'émission d'impulsions du rayon laser étant synchronisée avec un déplacement relatif de l'article de telle manière que pendant chacune des séquences successives d'impulsions, le rayon laser frappe la même rangée de points sur l'article, le laser étant un laser CO₂ émettant des impulsions avec un intervalle d'impulsion entre deux impulsions successives sur le même point qui est extrêmement long en comparaison à la largeur d'impulsion.

2. Procédé selon la revendication 1, dans lequel l'intervalle d'impulsion est 1000 fois plus long que l'intervalle de largeur d'impulsion et, simultanément, les impulsions sont choisies dans un intervalle de largeur d'impulsion de 0,02 à 0,1 ms.

3. Procédé selon la revendication 1 ou 2, dans lequel un déplacement relatif entre l'article et le rayon laser a lieu pendant l'impulsion et l'intervalle entre impulsions.

4. Procédé selon la revendication 1 ou 2, dans lequel, pendant chaque impulsion du laser, le rayon laser suit la surface de l'article par un déplacement simultané du rayon laser et de l'article.

5. Procédé selon l'une ou plusieurs des revendications précédentes, dans lequel l'article tourne à une vitesse uniforme pendant le traitement.

6. Procédé selon l'une ou plusieurs des revendications précédentes, pour découper, graver ou souder, dans lequel l'émission d'impulsions du rayon laser est synchronisée avec le déplacement relatif de l'article de manière telle que pendant chacune des séquences successives d'impulsion, le rayon laser frappe des rangées de points qui sont successivement déplacées par rapport aux rangées précédentes de points.

7. Procédé selon la revendication 6, dans lequel le dispositif de synchronisation comprend un optocoupleur (7).
